(19) **Europäisches Patentamt / European Patent Office / Office européen des brevets**

(11) **EP 4 597 687 A1**

(12) **EUROPEAN PATENT APPLICATION**
published in accordance with Art. 153(4) EPC

(43) Date of publication:
06.08.2025   Bulletin 2025/32

(21) Application number: 23873254.9

(22) Date of filing: 27.09.2023

(51) International Patent Classification (IPC):
$H01M\ 10/54$ (2006.01)   $B09B\ 3/35$ (2022.01)
$B02C\ 23/08$ (2006.01)   $B03C\ 1/00$ (2006.01)
$B09B\ 101/16$ (2022.01)

(52) Cooperative Patent Classification (CPC):
B02C 23/08; B03C 1/00; B09B 3/35; H01M 10/54;
B09B 2101/16; Y02W 30/84

(86) International application number:
PCT/KR2023/015109

(87) International publication number:
WO 2024/072147 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority:  27.09.2022  KR 20220122784

(71) Applicants:
• POSCO Holdings Inc.
Seoul 06194 (KR)
• POSCO Co., Ltd
Pohang-si, Gyeongsangbuk-do 37859 (KR)

(72) Inventors:
• HAN, Sangwoo
Seoul 06194 (KR)
• KIM, Chun
Seoul 06194 (KR)
• LEE, Juseung
Seoul 06194 (KR)
• KIM, Wanyi
Seoul 06194 (KR)
• PARK, Joongkil
Seoul 06194 (KR)

(74) Representative: Pfenning, Meinig & Partner mbB
Patent- und Rechtsanwälte
Theresienhöhe 11a
80339 München (DE)

(54) **UNIT BATTERY SHREDDING, BATTERY SHREDDED MATERIAL CONTAINING SAME, AND METHOD OF TREATMENT OF BATTERY**

(57)   Provided are a crushed unit battery material, a crushed battery material including the same, and a battery treatment method. The crushed unit battery material is a crushed unit battery material for recovering valuable metals from a waste battery, has a layered structure including a separator in which a positive electrode or a negative electrode is laminated on at least one surface, and satisfies the following Conditions 1 and 2:
<Condition 1> the layered structure has a laminate structure of 1 layer or more and 7 layers or less.
<Condition 2> a size of the crushed unit battery material is 100 mm or less based on a long axis which is the longest axis in horizontal, vertical, and height directions.

**EP 4 597 687 A1**

【Figure 4】

**Description**

**[Technical Field]**

The following disclosure relates to a waste battery, and relates to a crushed unit battery material extracted from waste battery recycling, a crushed battery material including the same, and a battery treatment method.

**[Background Art]**

As a demand for electric vehicles is growing worldwide, a problem of treating waste batteries resulting from the electric vehicles is emerging as a social issue. A lithium secondary battery which is the main raw material of the waste battery contains an organic solvent, an explosive material, and heavy metal materials such as Ni, Co, Mn, and Fe, but Ni, Co, Mn, and Li has a great rarity as a valuable metal, and recovery and recycling processes after discarding the lithium secondary battery is emerging as an important field of study.

Specifically, the lithium secondary battery includes copper and aluminum which are used as a current collector, a Li, Ni, Co, or Mn-containing oxide forming a positive electrode material, and graphite used as a negative electrode material, as the main configuration, and also includes a separator which separates the positive electrode material and the negative electrode material and an electrolyte solution which is injected into the separator. A solvent forming the electrolyte solution and a solvent used as a salt are used mainly in combination with carbonate organic materials such as ethylene carbonate and propylene carbonate, and for example, $LiPF_6$ is used.

In order to use the waste battery, development of a waste battery recycling process in which the waste battery is ground to produce an intermediate material such as crushed waste battery material or black powder, and then is subjected to a post-process to recovery valuable metals is actively in progress.

However, in the waste battery recycling process, though there is a difference depending on the number of battery uses or states, since the waste battery generally has a voltage in a range of 3.0 to 3.2 V in a fully discharged state and has a voltage close to 4 V in a fully charged state, the residual voltage of a module or pack in which dozens or hundreds of cells are connected has significantly high energy, and thus, there is a safety problem related to battery explosion or electric shock when applying an external shock to the waste battery to physically disassemble the waste battery.

In order to prevent the problem, a hole is produced in the battery after the disassembly and the battery is discharged in salt water. The battery which has been discharged is subjected to a crushing step and then a heat treatment at a high temperature for removing water and an electrolyte solution.

Herein, a salt used in the salt water discharge includes a material such as Na, K, Cl, Mg, and Ca in a large amount. Among the materials described above, in particular, a predetermined part of Cl is removed in the process of heat treatment at a high temperature, but black powder which is a mixed powder form of the crushed material of the waste battery or an oxide of Ni-Co-Mn-Li-O obtained by removing Al, Cu, and a part of a separator by further processing the crushed material and C includes materials such as Na, K, and Mg as impurities.

Since impurities have a problem of reducing a recovery rate in an extraction process using acid leaching in the post-process during the waste battery recycling process, research on a method for solving the problem is needed.

**[Disclosure]**

[Technical Problem]

The present disclosure attempts to provide a crushed unit battery material capable of having a low impurity content and preventing fire occurrence, through waste battery recycling, according to an exemplary embodiment.

The crushed battery material according to an exemplary embodiment has the benefits described above and provides the crushed battery material including at least one or more crushed unit battery materials.

The battery treatment method according to another exemplary embodiment of the present disclosure provides a method of treating a battery which allows stable treatment of waste batteries by a simple process without explosion or fire.

[Technical Solution]

An exemplary embodiment of the present disclosure provides a crushed unit battery material for recovering valuable metals from a waste battery, wherein the crushed unit battery material has a layered structure including a separator in which a positive electrode or a negative electrode is laminated on at least one surface and satisfies the following Conditions 1 and 2:

<Condition 1> the layered structure has a laminate structure of 1 layer or more and 7 layers or less,

<Condition 2> a size of the crushed unit battery material is 100 mm or less based on a long axis which is the longest axis in horizontal, vertical, and height directions.

In an exemplary embodiment, a surface of the crushed unit battery material may include a combustion part which is an area where at least a part of the surface is burned and a normal part having no trace of combustion on the surface, and an area ratio of the combustion part to the normal part may be 30% or less. In an exemplary embodiment, the combustion part may be formed in an edge part of the surface.

Another exemplary embodiment of the present disclosure provides a crushed battery material including at least one of the crushed unit battery materials described above.

In an exemplary embodiment, a content of the crushed unit battery material may be 90% or more in a total volume of the crushed battery material. In an exemplary embodiment, the crushed battery material may include impurities of 0.4% or less of Na, 0.03% or less of Ca, 0.02% or less of Mg, and 0.02% or less of K, by weight.

Still another exemplary embodiment of the present disclosure provides a battery treatment method including:

freezing a battery;
crushing the frozen battery into a crushed battery material; and
stabilizing the crushed battery material using a cooling fluid,
wherein the crushed battery material includes at least one crushed unit battery material, and the crushed unit battery material has a layered structure including a separator in which a positive electrode or a negative electrode is laminated on at least one surface and satisfies the following Conditions 1 and 2:

<Condition 1>
the layered structure has a laminate structure of 1 layer or more and 7 layers or less,
<Condition 2>
a size of the crushed unit battery material is 100 mm or less based on a long axis which is the longest axis in horizontal, vertical, and height directions.

In an exemplary embodiment, the crushing step may include controlling a ratio of the crushed unit battery material to 90% or more in the total volume of the crushed battery material. In an exemplary embodiment, the step of freezing a battery may satisfy the following Equation 1:

<Equation 1>

$$\text{Minimum cooling time (Hr)} = A \times (W^{0.33})$$

wherein $A = 4 \times e^{(-0.02 \times dT)}$, W = battery weight (Kg), dT = | external cooling temperature - target temperature |, and ‖ refers to an absolute value.

In an exemplary embodiment, the cooling step may be performed by cooling at -150°C to -20°C. In an exemplary embodiment, the step of stabilizing the crushed battery material using a cooling fluid may be performed under the condition of 15 to 40°C.

In an exemplary embodiment, the cooling fluid may be performed by at least any one of air, vacuum, nitrogen, inert gas, and water. In an exemplary embodiment, when the cooling fluid is performed by a gas, an average stabilization time may satisfy the following Equation 2:

<Equation 2>

$$B = 0.0125A^2 + 2.6979A + 170.9 \pm 100$$

wherein A is a size of crushed material [mm], and B is a stabilization time [min].

In an exemplary embodiment, when the cooling fluid is performed by a liquid, the average stabilization time may satisfy the following Equation 3:

<Equation 3>

$$B = -0.0007A^2 + 0.3246A + 37.07 \pm 50$$

wherein A is a size of crushed material [mm], and B is a stabilization time [min].

In an exemplary embodiment, the freezing step may be performed by cooling to -60°C to -20°C, and the crushing step may be performed under a vacuum atmosphere conditions of 100 torr or less. In an exemplary embodiment, in the crushing step, a recovery time taken to cool the crushed battery material to a range of 20 to 50°C may be 200 minutes or less. In an exemplary embodiment, after the crushing step, a step of magnetic separation or gravity separation for separating a product having a maximum size of 1 mm or less may be further included.

[Advantageous Effects]

The valuable metal alloy according to an exemplary embodiment of the present disclosure provides a crushed unit battery material which has a low impurity content and prevents fire occurrence, by going through a step of freezing a waste battery at a predetermined temperature and then crushing the battery.

The crushed battery material according to another exemplary embodiment provides a crushed battery material having at least one of the crushed unit battery materials having the benefit described above.

The waste battery recycling method according to another exemplary embodiment provides a battery treatment method which prevents the combustible material of an electrolyte solution from reacting with oxygen, by going through a step of freezing a waste battery at a predetermined temperature and then crushing the battery.

[Description of the Drawings]

FIG. 1 shows changes in voltage of a battery depending on cooling temperature, according to an exemplary embodiment.

FIG. 2 is a graph showing a relationship among battery weight, external cooling temperature, and cooling time, according to an exemplary embodiment of the present disclosure.

FIGS. 3A and 3B are photographs of the examples depending on a minimum cooling time of the present disclosure, and FIGS. 3C and 3D are photographs of the comparative examples depending on a minimum cooling time of the present disclosure.

FIG. 4 is a graph of temperature depending on the time of a crushed material, according to an exemplary embodiment of the present disclosure.

FIG. 5A shows the crushed unit battery materials according to an exemplary embodiment and the comparative example of the present disclosure, FIG. 5B shows a mixing ratio depending on a weight ratio of the crushed battery material, according to an exemplary embodiment of the present disclosure, and FIG. 5C shows a combustion part and a normal part of the surface of the crushed unit battery material.

FIG. 6A shows a stabilization time when the crushed battery material according to an exemplary embodiment of the present disclosure was stabilized in a cooling fluid which was a gas, as a graph, and FIG. 6B shows a stabilization time when the crushed battery material according to an exemplary embodiment of the present disclosure was stabilized in a cooling fluid which was a liquid, as a graph.

[Mode for Invention]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

In the present specification, when it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

Hereinafter, an exemplary embodiment of the present disclosure will be described in detail. However, it is suggested as an example, and the present disclosure is not thereby, and the present disclosure is only defined by the scope of the claims described later.

The crushed unit battery material according to an exemplary embodiment of the present disclosure is for recovering valuable metals from a waste battery and has a layered structure including a separator in which a positive electrode or negative electrode is laminated on at least one surface. Specifically, the layered structure may include a configuration including a positive electrode or negative electrode on one or both surfaces of the separator based on a separator. More specifically, the number of layers of the layered structure may correspond to the number of separators.

The layered structure may include, for example, any one of positive electrode-separator-negative electrode, positive electrode-separator, separator-positive electrode, separator-negative electrode, and negative electrode-separator, and for example, positive electrode-separator-negative electrode-separator-positive electrode-separator-negative electrode may have three-layered structure. Specifically, since at least one or more layers are laminated, the crushed unit battery material may have a predetermined thickness in the thickness direction.

In an exemplary embodiment, the crushed unit battery material may satisfy the following Condition 1:
<Condition 1> the layered structure may have a laminate structure of 1 layer or more and 7 layers or less.

The crushed unit battery material may have a layered structure having a laminate structure of 1 layer or more and 7 layers or less. Specifically, the layered structure may have a laminate structure of 1 layer or more and 5 layers or less. As the lamination is performed in the above range, the layered structure may minimize the amount of temperature rise of the crushed material and its heating time may be appropriate. When the layered structure is laminated at a larger thickness than the upper value of the range, combustion occurs with an excessively increased amount of temperature rise and also an increased heating time, resulting in fire occurrence.

In an exemplary embodiment, the crushed unit battery material may satisfy the following Condition 2:
<Condition 2> a size of the crushed unit battery material may be 100 mm or less based on a long axis which is the longest axis in horizontal, vertical, and height directions.

In an exemplary embodiment, the crushed unit battery material may have a size of 100 mm or less based on the long axis. Specifically, the size of the crushed unit battery material may be 50 mm or less. When the size of the crushed unit battery material is excessively large, the temperature of the crushed battery material itself rises to 100°C or higher, so that there is a high possibility of fire.

In an exemplary embodiment, the surface of the crushed unit battery material may include a combustion part and a normal part. The combustion part refers to an area where at least a part of the surface is burned, and the normal part refers to a normal part having no trace of combustion on the surface.

In an exemplary embodiment, in the surface of the crushed unit battery material, an area ratio of the combustion part to the normal part may satisfy 30% or less. By satisfying the area ratio of the combustion part to the normal part of 30% or less, a possibility of the combustion of the crushed unit battery material to cause fire may be prevented. When the area ratio of the combustion part to the normal part is more than 30%, there is a risk that the crushed unit battery material burning and causing fire with smoke.

In an exemplary embodiment, in the surface of the crushed unit battery material, the combustion part may be placed on the edge of the surface. The normal part may be placed near the center part on the surface of the crushed unit battery material. The combustion part refers to an area showing a darker color than the normal part.

The crushed battery material according to another exemplary embodiment may include at least one or more of the crushed unit battery materials described above. In an exemplary embodiment, the crushed battery material may have the content of at least one or more of the crushed unit battery materials of 90% or more in the total volume of the crushed battery. Specifically, the content of the crushed unit battery material may be 95% or more in the total volume of the crushed battery material.

Specifically, it may corresponds to the description that the crushed battery material may have a ratio of the crushed unit battery material having a laminate structure of more than 7 layers of 10% or less, specifically 5% or less in the total volume of the crushed battery material, or a ratio of at least one or more of the crushed unit battery materials having a size of more than 100 mm based on a long axis of 10% or less, specifically 5% or less in the total volume of the crushed battery material.

As such, the ratio of the crushed battery material having a layered structure of more than 7 layers per unit volume in the total volume of the crushed battery material, or the ratio of the crushed unit battery material having the size of more than 100 mm based on the long axis satisfies the above range, thereby preventing fire occurrence.

In an exemplary embodiment, the crushed battery material is recovered from a waste battery and includes impurities, and the impurities may include Na, Ca, Mg, and K, by weight. The crushed battery material may be a residual crushed material or black powder which is prepared by recovering the waste battery and crushing the battery, as the pretreatment process of the waste battery recycling process.

The crushed battery material may include impurities such as Na, Ca, Mg, and K. The crushed battery material allows easy extraction of Li which is a homologous valuable metal in the post-process, by lowering the contents of the impurities.

The crushed battery material according to an exemplary embodiment of the present disclosure includes impurities, and the impurities may include 0.4% or less (excluding 0%) of Na, 0.03% or less (excluding 0%) of Ca, 0.02% or less of Mg, and 0.02% or less of K, by weight.

Hereinafter, the reasons for limiting the contents of the impurities will be described.

### Na: 0.4% by weight or less (excluding 0%)

Sodium (Na) partially reacts instead of lithium in a lithium hydroxide formation process, as a homologous element in the post-process for recovering valuable metals from the crushed battery material and has a side effect of forming sodium hydroxide to lower the recovery rate of lithium or increasing cost in the causticization process. The crushed battery material may include 0.4% by weight or less, specifically 0.1% by weight or less of the sodium.

In the case in which the sodium is included in a larger amount than the range, when Na is increased, in a crystallization process of Li dissolved in a solvent after a leaching process and a solvent extraction process, Na is a Group 1 element identical to Li and decreases an actual yield in a process required when producing lithium carbonate.

### Ca: 0.03% by weight or less (excluding 0%)

Calcium (Ca) is an element which lowers the recovery rate of valuable metals in the post process for recovering valuable metals from the crushed battery material, like the sodium. When forming lithium aluminate, calcium has higher reactivity with lithium than aluminum and forms a lithium calcinate structure, thereby inhibiting formation of lithium aluminate which is favorable for a subsequent reaction and lowering the final recovery rate of lithium. The crushed battery material may include 0.03% or less, specifically 0.02% or less of calcium.

When the calcium is contained in a larger amount than the range, when Ca is increased, an actual yield and a process time are increased in a solid-liquid separation process which is an impurity purification process after the leaching process. In addition, in the case in which a calcium content is excessively high, when nickel, cobalt, and manganese hydroxides, and lithium hydroxide in a precursor state are synthesized to produce a positive electrode material, they are synthesized into $Li[NiCoMn]_{1-x}Ca_x)]O_2$ and potassium forms a positive electrode material oxide structure, which hinders movement of lithium ions to decrease a battery capacity.

### Mg: 0.02% by weight or less

Magnesium (Mg) is an element which prevents easy separation of solid and liquid phases during leaching by an acid in a valuable metal recovery process. The crushed battery material may include 0.02% by weight or less, specifically 0.01% by weight or less of the magnesium.

When the magnesium is included in a larger amount than the range, a load is applied to a recovery process of nickel, cobalt, lithium, and the like. In addition, in the case in which a magnesium content is excessively high, when nickel, cobalt, and manganese hydroxides, and lithium hydroxide in a precursor state are synthesized to produce a positive electrode material, they are synthesized into $Li[NiCoMn]_{1-x}Mg_x)]O_2$ to form a positive electrode material oxide structure, which hinders movement of lithium ions to decrease a battery capacity.

### K: 0.02% by weight or less

Potassium (K) is also a homologous element of lithium and is an element acting as a hindrance in behavior of lithium being produced into a hydroxide compound. The crushed battery material may include 0.02% by weight or less, specifically 0.01% by weight or less of the potassium. When the potassium is included in a larger amount of the range, a load is caused in a causticization process to drop the recovery rate of lithium.

The battery treatment method according to another exemplary embodiment of the present disclosure includes: freezing a battery, crushing the frozen battery, and stabilizing the crushed battery using a cooling fluid. The battery treatment method may be a method for treating various types of batteries including lithium ions, and the battery may be, for example, a lithium secondary battery separated from a vehicle or a secondary battery separated from electronic devices such as a mobile phone, camera, and laptop, and specifically, may be a lithium secondary battery.

In an exemplary embodiment, the step of freezing a battery may satisfy the following Equation 1:

<Equation 1>

$$\text{Minimum cooling time (Hr)} = A \times (W^{0.33})$$

wherein $A = 4 \times e^{(-0.02 \times dT)}$, W = battery weight (Kg), $dT = |$ external cooling temperature - target temperature $|$, and $\|$ refers to an absolute value.

W of Equation 1 refers to the weight of the battery, and for example, refers to the weight of a battery pack, a single battery, or a combination thereof. The minimum cooling time is external cooling temperature which is cooling temperature applied to the battery, and for example, refers to target temperature for cooling an electrolyte solution in the battery.

The step of freezing a battery is performed for the minimum cooling time or longer, thereby cooling even an electrolyte solution inside the battery and has a benefit of stably performing a subsequent process. In the step of freezing a battery, when the battery is frozen for a shorter period of time than the minimum cooling time, an electrolyte solution is not cooled to cause a risk of fire during crushing.

The step of freezing a battery is performed at a temperature sufficient to freeze the electrolyte included in the battery. Specifically, the step of freezing may be performed in a temperature range of, for example, -150 to -20°C. More specifically, the temperature range may be -150 to -50°C, more specifically, -80 to -60°C.

When the battery is frozen to the temperature range, voltage slightly remaining inside the battery, for example, a voltage of about 2 V to 3 V is lowered close to 0 V, and thus, even when a short circuit in which a positive electrode and a negative electrode are directly brought into contact occurs, a battery reaction does not occur, so that a battery temperature does not rise and gassing and combustion of an electrolyte do not occur. In addition, since the electrolyte is in a state of being frozen or in a state in which vaporization is suppressed, lithium ion mobility is very low, so that conduction properties due to the lithium ion movement may be significantly decreased and vaporization of the electrolyte solution may not occur, and thus, a combustible gas of ethylene, propylene, and hydrogen may not occur.

When the freezing process is out of the temperature range, for example, the freezing is performed to a temperature higher than -60°C, voltage remaining inside a battery is not lowered to 0 V, and thus, a battery reaction by short circuit may occur and an electrolyte is not completely frozen, which is not appropriate. In addition, when the temperature is cooled to -150°C, the electrolyte is sufficiently cooled and also the voltage inside the battery is lowered to 0 V, and thus, there is no need to lower the temperature below -150°C. As such, the battery treatment method includes a freezing step before crushing batteries such as a lithium secondary battery, thereby preventing a risk of fire which may occur in the battery crushing process.

The step of crushing the frozen battery refers to a process of applying shock or pressure to the battery so that a part of the battery falls off from the battery. In an exemplary embodiment, the step of crushing the battery refers to all of a process of crushing the battery, a process of cutting the battery, a process of compressing the battery, or a combination of thereof. Specifically, the step of crushing may include all processes of breaking a battery into small-sized crushed material.

In an exemplary embodiment, the step of crushing the battery may include both a process of compressing the frozen battery and a process of applying external force such as shear or tensile force to break the battery. The step of crushing the battery may be performed, for example, using a crusher.

In an exemplary embodiment, the step of crushing the battery may be performed at least once or more. Specifically, the step of crushing may be performed continuously or discontinuously at least once or more.

In an exemplary embodiment, the step of freezing and forcibly discharging the battery may be performed under the condition of supplying inert gas, carbon dioxide, nitrogen, water, or a combination thereof or under the vacuum conditions of 100 torr or less. For example, when a process of freezing a battery is performed by cooling to a temperature range of -60 to -20°C under the conditions described above, oxygen supply may be suppressed to prevent an electrolyte from reacting with oxygen, prevent explosion therefrom, and suppress vaporization of the electrolyte solution, and thus, a combustible gas such as ethylene, propylene, or hydrogen may not occur.

In an exemplary embodiment, at least one or more of the crushed unit battery materials included in the crushed battery material may satisfy the following Condition 1:

<Condition 1>

the layered structure may have 1 layer or more and 7 layers or less.

Condition 1 means that the layered structure of the crushed unit battery material in which a positive electrode or negative electrode includes a separator laminated on at least one surface is controlled to a laminate structure of 1 layer or more and 7 layers or less.

In an exemplary embodiment, the layered structure may be a laminate structure of 1 layer or more and 7 layers or less. Specifically, the layered structure may be a laminate structure of 1 layer or more and 5 layers or less. Since the layered structure is laminated in the range, an amount of temperature rise of the crushed material is minimized, and a heating time may be appropriate. When the layered structure is laminated at a larger thickness than the upper limit of the range, combustion occurs with an excessively increased amount of temperature rise and also an increased heating time.

In an exemplary embodiment, at least one or more of the crushed unit battery materials included in the crushed battery material may satisfy the following Condition 2:
<Condition 2>
a size of the crushed unit battery material may be 100 mm or less based on a long axis which is the longest axis in horizontal, vertical, and height directions.

In an exemplary embodiment, the size of the crushed unit battery material may be controlled so that specifically, the size is 100 mm or less, specifically 50 mm or less based on the long axis which is the longest axis in the horizontal, vertical, and height directions, in the crushing step. When a maximum size of the crushed battery material is more than 100 mm, a heating temperature which occurs due to the instability resulting from the crushing of a battery material is crushed rises even to a temperature range of 120°C which is an average vaporization temperature of an electrolyte solution, and a problem in stability such as fire occurrence may arise.

In an exemplary embodiment, the step of crushing the battery may further include controlling a ratio of the crushed unit battery material to 90% or more, specifically 95% or more in the total volume of the crushed battery material. Specifically, it may correspond to the ratio of the crushed unit battery material having a laminate structure of more than 7 layers controlling to 10% or less in the total volume of the crushed battery material. Specifically, the ratio of the crushed unit battery material having the laminate structure of more than 7 layers may be controlled to 5% or less in the total volume of the crushed battery material. By satisfying the range, fire occurrence may be prevented.

In an exemplary embodiment, in the crushing step, a recovery time taken to cool the crushed battery material to a range of 20 to 50°C may be 200 minutes or less. Specifically, the recovery time taken to cool the crushed battery material to a range of 35 to 45°C may be 200 minutes or less.

In an exemplary embodiment, the step of stabilizing the crushed battery material using a cooling fluid may be performed in a temperature range of -20 to 80°C. When it is performed in a range below the lower limit of the temperature, there is an uneconomical problem of requiring an additional facility for maintaining temperature, and when it is performed in a range exceeding the upper limit, instability to fire of the crushed battery material may not be resolved.

In an exemplary embodiment, the step of stabilizing the crushed battery material using a cooling fluid may be performed for 30 minutes to 10 hours depending on the type of cooling fluids. When the time is below the lower limit of the time range, there is a problem of fire occurrence by reheating, and when the time exceeds the upper limit of the time range, a production amount is decreased due to the increased process treatment time.

In an exemplary embodiment, in the step of stabilizing the crushed battery material using a cooling fluid, the cooling fluid may be performed by at least any one of air, vacuum, inert gas, nitrogen, and water. By stabilizing the crushed battery material using the cooling fluid described above, the crushed battery material having a low content of Na among the impurities in the crushed battery material may be obtained. It is confirmed that it takes more time to stabilize using the cooling fluid than using a liquid under a gas or vacuum atmosphere.

In an exemplary embodiment, when the cooling fluid is performed by a gas in the battery treatment method, the average stabilization time may satisfy the following Equation 2:

<Equation 2>

$$B = 0.0125A^2 + 2.6979A + 170.9 \pm 100$$

wherein A is a size of crushed material [mm], and B is a stabilization time [min].

In an exemplary embodiment, when the cooling fluid is performed by a liquid in the battery treatment method, the average stabilization time may satisfy the following Equation 3:

<Equation 3>

$$B = -0.0007A^2 + 0.3246A + 37.07 \pm 50$$

wherein A is a size of crushed material [mm], and B is a stabilization time [min].

The average stabilization time is a value showing a time taken to cool the crushed battery material after heating to room temperature in minute and refers to an average time of a maximum time and a minimum time. Specifically, Equation 2 may satisfy a range of $0.0125A^2 + 2.6979A + 70.9$ as the lower limit and a range of $0.0125A^2 + 2.6979A + 270.9$ as the upper limit. Equation 3 may satisfy a range of $B = -0.0007A^2 + 0.3246A - 12.93$ as the lower limit and a range of $B = -0.0007A^2 + 0.3246A + 87.07$ as the upper limit.

When the stabilization step of the battery treatment method of the present disclosure is performed in a gas or liquid, each of Equations 2 and 3 is satisfied, thereby appropriately maintaining stabilization of the crushed material depending on the crushed material to lower the fire occurrence possibility of the crushed material.

In an exemplary embodiment, a step of separating a product having a maximum size of 1 mm or less from the crushed product may be further performed. The step of separating may be performed by magnetic separation or gravity separation, and any separation process which is well known in the art may be performed. As such, the step of separating is further performed, thereby obtaining powder in which a positive electrode active material, a negative electrode active material, a positive electrode current collector, and a negative electrode current collector are mixed. In addition, in an exemplary embodiment, after performing the crushing process, a process of removing and separating the electrolyte solution may be performed. The process of removing an electrolyte solution may be performed by heat treating or drying in vacuum a crushed product.

The following examples illustrate the present disclosure in more detail. However, the following examples are only a preferred exemplary embodiment, and the present disclosure is not limited to the following examples.

**<Temperature inside battery depending on minimum freezing time>**

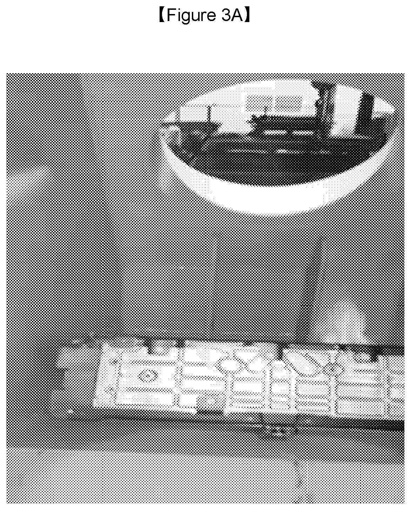

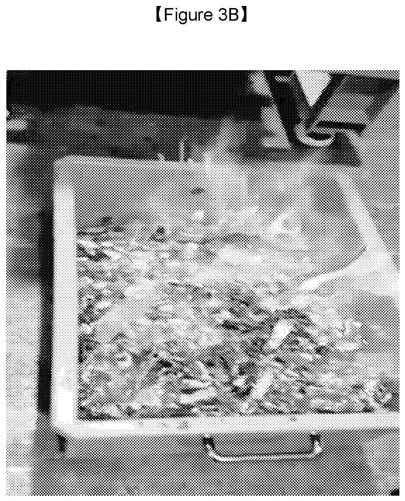

The battery pack used in the examples was crushed using the same crusher as that of the example, without freezing. Flame caused by short circuit occurred during the crushing process, as shown in FIGS. 3A and 3B.

As such, it was confirmed from the examples and the comparative examples that since no short circuit and no flame occurred in the step of crushing the battery, by including a step of freezing a battery pack including the battery, before crushing the battery, stability was excellent.

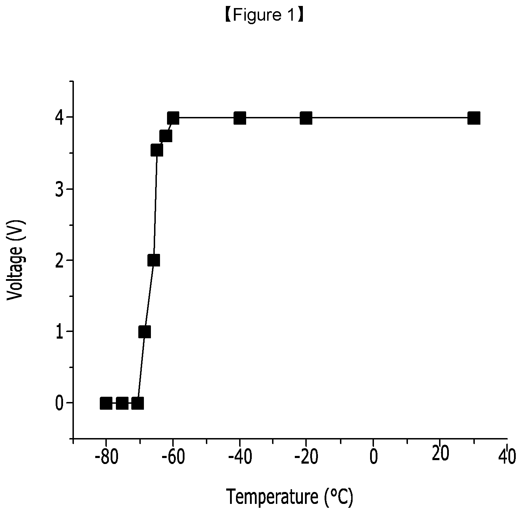

FIG. 1 shows a change in voltage of the battery depending on cooling temperature, according to an exemplary embodiment of the present disclosure.

Referring to FIG. 1, when a battery voltage was measured while cooling the battery to -80°C, the battery pack showed almost the same voltage at a high temperature of about 40°C, at room temperature, and down to -60°C, it was confirmed that battery characteristics were not lost. Subsequently, when the temperature was lowered to -60°C to -70°C, it was confirmed that voltage was rapidly lowered and voltage was 0 below -70°C. As such, when the battery was frozen to -60°C to -150°C, it was confirmed that no short circuit occurred.

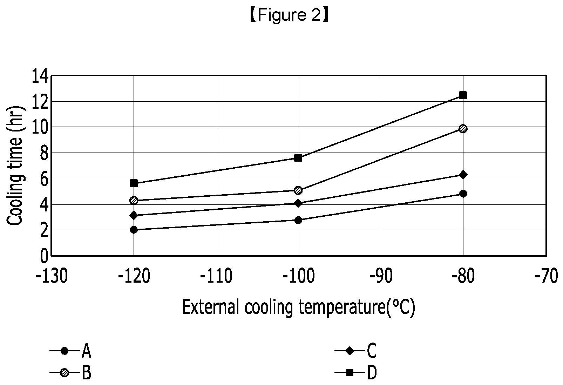

FIG. 2 is a graph showing a relationship among battery weight, external cooling temperature, and cooling time, according to an exemplary embodiment of the present disclosure.

Referring to FIG. 2, it was confirmed that the battery treatment method according to an exemplary embodiment of the present disclosure was able to derive a minimum cooling time for cooling the battery, in the step of freezing a battery. Specifically, it was confirmed that the minimum cooling time was related to battery weight, external cooling temperature, and target temperature. Specifically, the external cooling temperature and the minimum cooling time when the target temperature was set to -70°C and the battery weight was set to 2.5 kg (A), 10 kg (B), 20 kg (C), and 50 kg (D), respectively, are shown. When cooling the battery, the electrolyte solution of the battery began to cool after a predetermined time and a state of a voltage of 0 was confirmed. Thus, in cooling of the battery, it was confirmed that a minimum maintenance time for sufficiently cooling the inside, specifically the electrolyte solution was needed.

Specifically, in a heat transfer situation for cooling which loses heat to the outside, considering the specific heat of the battery itself, it was confirmed that battery weight and a time for cooling were needed. As such, in the present disclosure, in order to cool the battery, external cooling temperature and target temperature for freezing and battery weight were used to confirm a minimum time needed for cooling.

In the following Table 1, the minimum cooling time depending on the battery weight and the external cooling temperature is listed.

(Table 1)

|  | Battery weight [Kg] | External cooling temperature [°C] | Target temperature [°C] | Equation 1 | Minimum cooling time[h] |
|---|---|---|---|---|---|
| A_1 | 2.5 | -120 | -70 | 1.9 | 1.9 |
| A_2 | 2.5 | -100 | -70 | 2.9 | 2.9 |
| A_3 | 2.5 | -80 | -70 | 4.4 | 4.4 |
| B_1 | 10 | -120 | -70 | 3.1 | 3.1 |
| B_2 | 10 | -100 | -70 | 4.6 | 4.6 |
| B_3 | 10 | -80 | -70 | 7.0 | 7.0 |
| C_1 | 20 | -120 | -70 | 3.9 | 3.9 |
| C_2 | 20 | -100 | -70 | 5.8 | 5.8 |
| C_3 | 20 | -80 | -70 | 8.8 | 8.8 |

(continued)

| | Battery weight [Kg] | External cooling temperature [°C] | Target temperature [°C] | Equation 1 | Minimum cooling time[h] |
|---|---|---|---|---|---|
| D_1 | 50 | -120 | -70 | 5.3 | 5.3 |
| D_2 | 50 | -100 | -70 | 7.9 | 7.9 |
| D_3 | 50 | -80 | -70 | 11.9 | 11.9 |

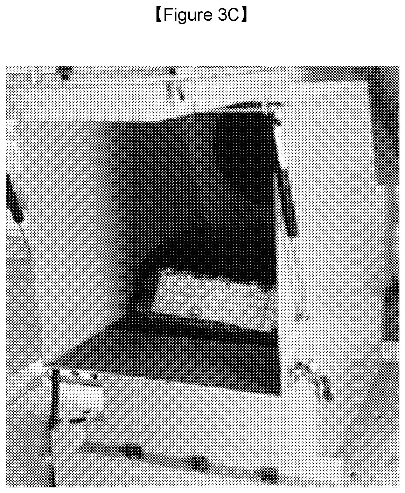

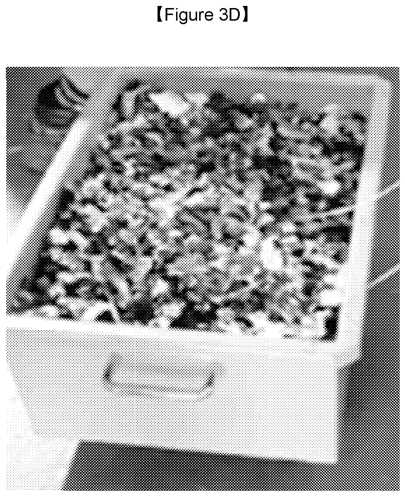

Upon review of Table 1, it was confirmed that the smaller the battery weight was, the less the minimum cooling of the battery to be cooled was required. In addition, it was confirmed that when cooling was performed with the value of Equation 1 derived from the relational expression depending on the battery weight, the external cooling temperature, and the target temperature as the minimum cooling time, the battery, specifically, even the electrolyte of the battery was cooled. In addition, when the battery was cooled for a time equal to or larger than the value of Equation 1, no fire occurred in the battery crushing process which is a post-process. FIGS. 3A and 3B are photographs of the examples depending on a minimum cooling time of the present disclosure, and FIGS. 3C and 3D are photographs of the comparative examples depending on a minimum cooling time of the present disclosure.

Referring to FIGS. 3A and 3B, a fire occurrence state when the battery was cooled for a shorter period of time than the minimum cooling time required in cooling the battery was experimented. In the experiment, when the battery weight was 25 kg, the external cooling temperature was -95°C, and the target cooling temperature was -70°C, the experiment was performed for 5 hours, which were shorter than 7 hours of the value of Equation 1.

<Equation 1>

$$\text{Minimum cooling time (Hr)} = A \times (W^{0.33})$$

wherein $A = 4 \times e^{(-0.02 \times dT)}$, W = battery weight (Kg), dT= | external cooling temperature - target temperature | , and ‖ refers to an absolute value

Referring to FIGS. 3C and 3D, the fire occurrence state of the crushed material when the battery was frozen for the minimum freezing time needed for cooling the battery or a longer period of time was experimented. In the experiment, the case of the battery weight and the external cooling temperature which were the same as those of FIGS. 3A and 3B and the minimum freezing time of 7 hours was experimented.

In the following Table 2, the same battery weight, the external cooling temperature, and the minimum freezing time according to FIGS. 3A to 3D, and the fire occurrence state of the examples and the comparative examples were compared. The fire occurrence state was determined as "o" when fire occurrence was observed, and "×" when it was not observed, after battery crushing.

(Table 2)

| | Battery weight [Kg] | External cooling temperature [°C] | Target temperature [°C] | Equation 1 | Actual cooling time [h] | Fire occurrence |
|---|---|---|---|---|---|---|
| Comparative Example | 25 | -95 | -70 | 7.0 | 5 | ○ |
| Example | 25 | -95 | -70 | 7.0 | 7 | × |

Upon review of Table 2, when the battery was cooled to a value smaller than the value of Equation 4 corresponding to the minimum cooling time, it was confirmed that the electrolyte was not cooled, and fire occurred after crushing the battery. As such, when the battery was cooled with the value of Equation 4 as the minimum cooling time, it was confirmed that the crushed material was able to be stably used without fire occurrence, after crushing the battery.

<Battery crushing step - size of crushed material>

Even when the frozen battery was crushed, a possibility of fire occurrence during crushing was low, but there was a potential difference even in the crushed material depending on the charge state of the battery inside the battery. In the present disclosure, it was measured how the temperature of the crushed material rose and a criterion for stabilizing the crushed material was set.

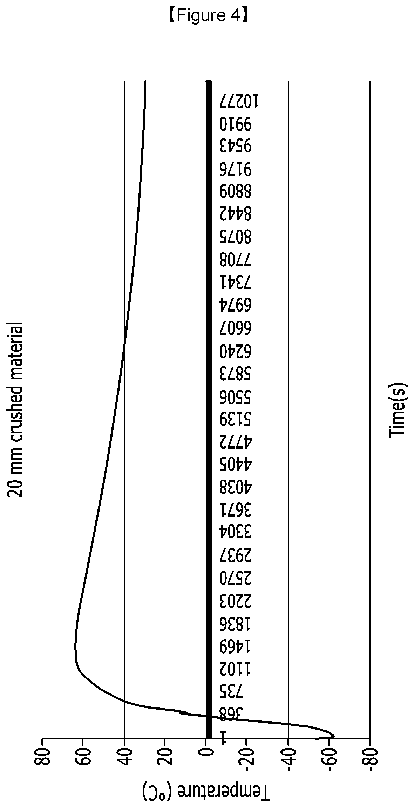

FIG. 4 is a graph of temperature depending on the time of a crushed material, according to an exemplary embodiment of the present disclosure.

In FIG. 4, in order to confirm the maximum heating temperature based on a crushed material having a size of 20 mm, a temperature change depending on time was confirmed. Specifically, the battery going through the cooling step was crushed, and the crushed material having a size of 20 mm among the produced crushed materials was placed in the air and a temperature change depending on time was measured by a cooling method using air. It was confirmed that the crushed material having a size of 20 mm had a maximum ignition temperature of about 65°C. This was confirmed to be lower than 120°C which is the average vaporization temperature of the electrolyte solution.

In the following Table 3, an amount of temperature rise depending on the size of the crushed material was measured.

(Table 3)

| | Average crushed material size (mm) | | | | | |
|---|---|---|---|---|---|---|
| | 1 | 10 | 20 | 50 | 100 | 150 |
| Amount of temperature rise [°C] | 30 | 50 | 65 | 90 | 110 | 140 |

Upon review of Table 3, it was confirmed that there was a difference in the reheating temperature depending on the size of the crushed material, and the average size of the crushed material should be crushed within 100 mm based on a long axis which was the longest axis among the horizontal, vertical, and height directions, at a stabilization temperature for process design.

**<Battery crushing step - crushed material size>**

In addition, depending on the size of the crushed material, the crushed material needed a physical stabilization time. As the method for stabilizing the crushed material, there was a need to continuously maintain a temperature condition lower than 120°C for a predetermined period of time, or maintain for a predetermined period of time in a state of adding an inert gas for decreasing contact with oxygen in the air.

In the present disclosure, the temperature was maintained for about 3 hours at a level of room temperature of 30°C, based on the size of the average crushed material of 20 mm, and at this time, it was confirmed that the rising temperature of the crushed material was lowered to room temperature.

For the stabilization time, in the case of the crushed material of 100 mm or less, there was no problem when the maintenance time was within several minutes, but in the case of the crushed material of more than 100 mm, the stabilization time should be at least 3 hours.

**<Battery crushing step - step of controlling crushed material of crushed battery material>**

When crushing was performed for the minimum freezing time of the crushed material or a shorter period of time, the crushed material did not have brittle fracture in a cryogenic condition, so that the size of the crushed material was large or the positive electrode current collector and the negative electrode current collector existed in multiple layers, which thickened the crushed material. As the layer thickness of the crushed material became large, the amount of temperature rise was large, and the heating time took long.

In the following Table 4, in the crushed unit battery material according to an exemplary embodiment of the present disclosure, the amount of temperature rise depending on the layered structure was measured with a thermal imaging camera.

Referring to the following Table 4, the layered structure means positive electrode-separator-negative electrode as one layer, and when the crushed material was laminated in multiple layers, it was laminated in an order of positive electrode-separator-negative electrode-separator-positive electrode-separator-negative electrode... Specifically, it means that multilayers were placed having the separator structure between the positive electrode and the negative electrode in the waste battery as one layer structure. Specifically, it may be the positive electrode or the negative electrode was placed on at least one surface of the separator based on the separator.

In the following Table 4, the average size of the crushed material was evaluated as 20 mm, and temperature by layer of the crushed material after crushing was evaluated and a recovery time required to raise the temperature from a cooling temperature to a maximum temperature and then lower the temperature to 40°C again was measured.

At this time, the size of the crushed material was measured based on a long axis of a long axis and a short axis of the crushed material.

(Table 4)

| | Number of layers of layered structure [layers] | Crushed material size [mm] | Maximum temperature [°C] | Recovery time to 40°C or lower [min] | Remarks |
|---|---|---|---|---|---|
| Experimental Example | 2 | 20 | 63 | 110 | Example |
| Experimental Example | 3 | 20 | 64 | 110 | Example |
| Experimental Example | 5 | 20 | 75 | 144 | Example |
| Experimental Example | 7 | 20 | 105 | 200 | Example |
| Experimental Example | 10 | 100 | combust | - | Comparative Example |

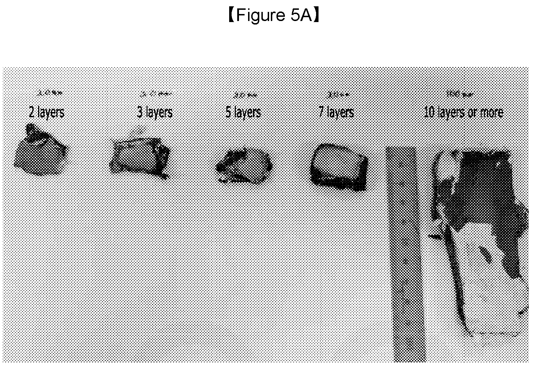

FIGS 5A to 5C show the crushed unit battery materials according to an exemplary embodiment and the comparative examples of the present disclosure. Referring to FIG. 5A, the examples and the comparative examples depending on the crushed material size of the crushed battery material and the number of layers of the layered structure may be confirmed.

Upon review of FIG. 5A and Table 4 simultaneously, it was confirmed that when the number of layers of the layered structure was 3 or less, the temperature of the crushed material was stably maintained at 110°C or lower, and when the number of layers was more than 7, the temperature rose to higher than 105°C and then the reaction with an electrolyte solution occurred to cause combustion.

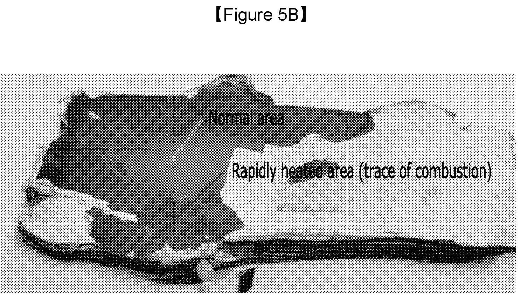

Referring to FIG. 5B, a mixing ratio depending on the weight ratio of the crushed battery material was confirmed. Specifically, the mixing was performed so that the weight of the crushed battery material having the layered structure of 7 layers or less (left side of FIG. 5B) was 905 g, and the weight of the crushed battery material having the layered structure of more than 7 layers (right side of FIG. 5B) was 95 g.

It was confirmed that in the case of 1 layer, when the size of the crushed battery material was larger than a maximum of 100 mm, the maximum temperature rose to a temperature higher than 105°C and there was a high possibility of fire. In addition, it was confirmed that even at 100 mm or less, when the number of layers of the layered structure was 10 or more, specifically more than 7, there was an increased possibility of fire.

The following Table 5 shows a possibility of fire occurrence depending on the % by weight ratio of the crushed material having the layered structure of more than 7, in the crushed battery material of the present disclosure.

(Table 5)

| | More than 7 layers weight ratio [%] | Number of experiments [times] | Frequency of fire occurrences [times] | Fire occurrence | Remarks |
|---|---|---|---|---|---|
| Experimental Example | Less than 2 | 10 | 0 | × | - |
| Experimental Example | 2-5 | 10 | 0 | × | - |
| Experimental Example | 6-10 | 10 | 1 | Δ | Smoke occurrence |
| Experimental Example | More than 10 | 3 | 3 | ○ | Fire occurrence |

Upon review of Table 5, as a result of measuring fire occurrence frequency in the crushed material in a cell unit of 1 kg several times, even in the case in which the weight ratio of the crushed material having the layered structure of more than 7 layers was included, it was confirmed that when it was included at 10% or less based on the total weight ratio, almost no fire occurred. In addition, it was confirmed that when the weight ratio of the crushed material having the layered structure of more than 7 layers was included at more than 10% based on the total weight ratio, fire occurred in all of the three experiments. At this time, the location of ignition of the fire started at the thick crushed material of 7 layers or more. As such, it was confirmed that when the weight ratio of the crushed material having the layered structure of more than 7 layers was 10% or less, specifically 5% or less with respect to the total weight of the crushed material, fire of the crushed material was prevented, and when it was a crushed material having the layered structure of 7 layers or more among the total battery crushed material or the crushed material having a size of more than 100 mm was included at more than 10%, the fire occurrence frequency was increased.

In addition, it was confirmed in the following Table 6 whether there was smoke occurrence depending on the ratio of a trace of combustion on the surface of the crushed material, according to an exemplary embodiment of the present disclosure.

(Table 6)

|  | Combustion part area/ normal part area ratio [%] | Smoke occurrence | Remarks |
|---|---|---|---|
| Experimental Example | 10 | × | Example |
| Experimental Example | 20 | × | Example |
| Experimental Example | 30 | × | Example |
| Experimental Example | More than 30 | ○ | Comparative Example |

FIG. 5C shows a combustion part and a normal part of the surface of the crushed unit battery material, according to an exemplary embodiment of the present disclosure. Referring to FIG. 5C, the normal area having no trace of combustion by a high temperature and the surface of the crushed material having a trace of combustion by a high temperature were confirmed on the surface of the crushed unit battery material surface. The combustion area is an area having a trace of combustion by a high temperature, specifically may be a rapidly heated area, and refers to an area having a darker color than the normal area which is an unburned area. It was shown that the combustion area was mostly burned on the edge.

Upon review of FIG. 5C and Table 6, it was confirmed that when there was no trace of combustion by a high temperature on the surface of the crushed unit battery material or a trace of combustion in the surface area was 30% or less, no combustion occurred when it was evaluated whether smoke occurred. It was confirmed that when a trace of combustion in the surface area was more than 30%, fire with smoke occurred.

<Battery stabilization step - stabilization time>

The following Table 7 shows the stabilization time depending on the type of cooling fluid and the size of the crushed material. Specifically, the stabilization time refers to a time (min) taken to cool the temperature to room temperature of 30°C after the temperature of the crushed material rose.

(Table 7)

| Type of cooling fluid | Time (min) | Crushed material size [mm] | | | | | | Whether Equation 2 was satisfied | Whether Equation 3 was satisfied |
|---|---|---|---|---|---|---|---|---|---|
|  |  | 1 | 10 | 20 | 50 | 100 | 150 |  |  |
|  | Air | 130 | 155 | 171 | 230 | 350 | 660 | ○ | - |
|  | Vacuu | 230 | 310 | 390 | 670 | 805 | 910 | ○ | - |

| m (1000 torr or less) | | | | | | | | |
|---|---|---|---|---|---|---|---|---|
| Argon | 140 | 170 | 200 | 260 | 510 | 950 | ○ | - |
| Nitrogen | 135 | 165 | 205 | 258 | 505 | 941 | ○ | - |
| Tap water | 35 | 45 | 48 | 51 | 60 | 75 | - | ○ |
| Salt water 1% | 33 | 43 | 47 | 52 | 64 | 71 | - | ○ |
| Salt water 10% | 33 | 43 | 48 | 50 | 62 | 73 | - | ○ |
| Salt water 15 % | 31 | 40 | 45 | 49 | 59 | 65 | - | ○ |

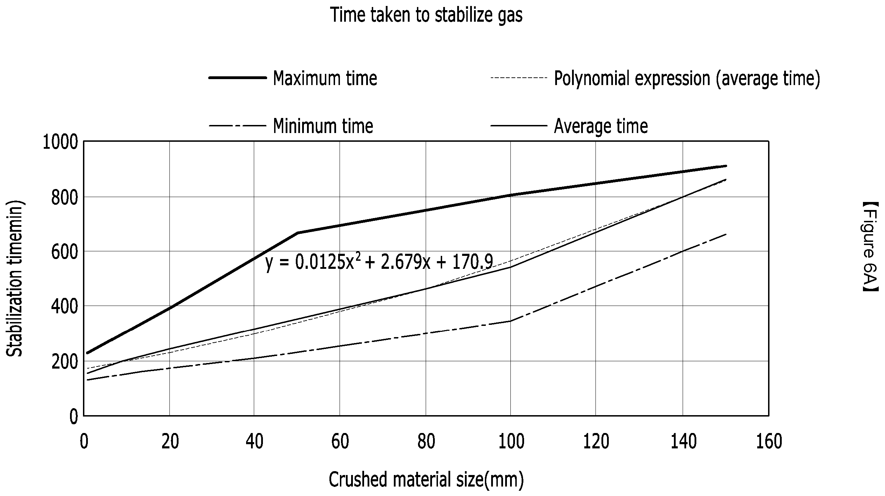

FIG. 6A shows a stabilization time when the crushed battery material according to an exemplary embodiment of the present disclosure was stabilized in a cooling fluid which was a gas, as a graph. Referring to FIG. 6A, the stabilization time depending on the size of the crushed material when a gas was used as the type of cooling fluid is shown. Specifically, the average stabilization time of the gas may satisfy Equation 2 described above as the average time of the maximum time and the minimum time.

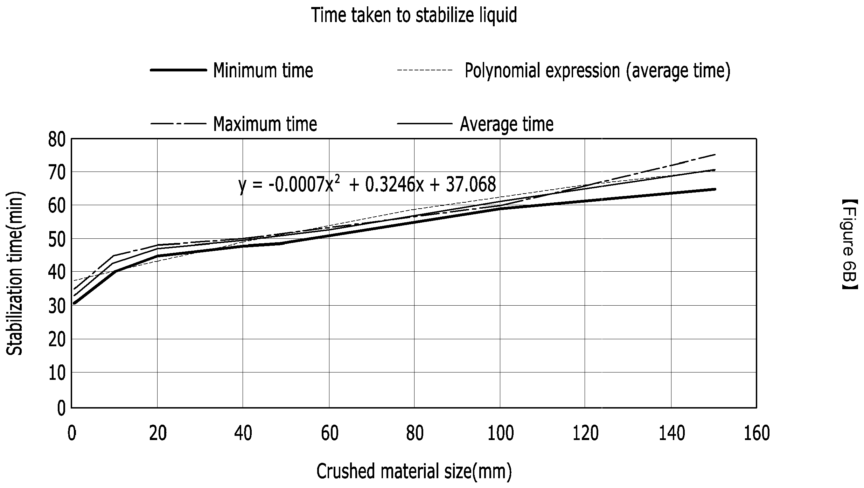

FIG. 6B shows a stabilization time when the crushed battery material according to an exemplary embodiment of the present disclosure was stabilized in a cooling fluid which was a liquid, as a graph.

Referring to FIG. 6B, the stabilization time depending on the size of the crushed material when a liquid was used as the type of cooling fluid is shown. Specifically, the average stabilization time of the liquid may satisfy Equation 3 described above as the average time of the maximum time and the minimum time.

**<Battery stabilization step - comparison of components of final crushed material>**

The following Table 8 shows the content of Na of the impurities, after going through the stabilization step using the cooling fluid. The cooling fluid refers to air, vacuum (1 torr), argon (Ar), nitrogen, tap water, a salt water concentration of 1% or less, a salt water concentration of 10% or less, and a salt water concentration of 15% or less.

(Table 8)

| | Type of cooling fluid | | | | | | | |
|---|---|---|---|---|---|---|---|---|
| | Air | Vacuu m (1 torr) | Argon | Nitroge n | Tap water | Salt water concentr ation 1 % | Salt water concentr ation 10 % | Salt water concent ration 15 % |
| Na [%] | 0.054 | 0.054 | 0.056 | 0.053 | 0.08 | 0.12 | 0.5 | 0.83 |

Upon review of Table 8, in the test of cooling fluid for stabilizing the crushed material after freeze crushing, it was confirmed that Na showed a low level of 0.054% in the air, but when a salt such NaCl was included at about 15%, Na was increased to 0.83%. Accordingly, various impurities included in the salt were controlled together. In the following Table 9, Na, K, Mg, and Ca component values of the crushed material going through the step of stabilizing the crushed material in the air after freeze crushing (Example 1) and the crushed material which was salt water discharged with a salt water including 15% of the salt (Comparative Example 1) were compared.

(Table 9)

| | Na [%] | K [%] | Mg [%] | Ca [%] |
|---|---|---|---|---|
| Salt water 10% | 0.50 | 0.023 | 0.032 | 0.031 |
| Salt water 15% (Comparative Example 1 | 0.830 | 0.027 | 0.049 | 0.034 |
| Air (Example 1) | 0.054 | <0.010 | <0.010 | 0.02 |
| Vacuum | 0.054 | <0.010 | <0.010 | <0.010 |
| Argon | 0.056 | <0.010 | <0.010 | <0.010 |
| Nitrogen | 0.053 | <0.010 | <0.010 | <0.010 |
| Tap water | 0.08 | <0.015 | <0.023 | 0.031 |

Upon review of Table 9, it was confirmed that the crushed battery material prepared by the battery recycling method after going through freezing crushing and stabilization steps had lower contents of impurities, specifically Na, K, Mg, and Ca than the crushed battery material prepared by salt water discharge. Though the preferred exemplary embodiments have been described in detail above, the scope of rights of the present disclosure is not limited thereto, and many variations and modifications by a person skilled in the art using the basic concept of the present disclosure as defined in the following claims also belong to the scope of rights of the present disclosure.

**Claims**

1.   A crushed unit battery material for recovering valuable metals from a waste battery,
     wherein the crushed unit battery material has a layered structure including a separator in which a positive electrode or a negative electrode is laminated on at least one surface and satisfies the following Conditions 1 and 2:

     <Condition 1> the layered structure has a laminate structure of 1 layer or more and 7 layers or less,
     <Condition 2> a size of the crushed unit battery material is 100 mm or less based on a long axis which is the longest axis in horizontal, vertical, and height directions.

2.   The crushed unit battery material of claim 1, wherein:
     a surface of the crushed unit battery material includes:

     a combustion part which is an area where at least a part of the surface is burned and
     a normal part having no trace of combustion on the surface, and
     an area ratio of the combustion part to the normal part is 30% or less.

3.   The crushed unit battery material of claim 2, wherein:

the combustion part is formed in an edge part of the surface.

4. A crushed battery material comprising at least one of the crushed unit battery materials of any one of claims 1 to 3.

5. The crushed battery material of claim 4, wherein:
a content of the crushed unit battery material is 90% or more in a total volume of the crushed battery material.

6. The crushed battery material of claim 4, wherein:
the crushed battery material includes: 0.4% or less of Na, 0.03% or less of Ca, 0.02% or less of Mg, and 0.02% or less of K, by weight.

7. A battery treatment method comprising:

freezing a battery;
crushing the frozen battery into a crushed battery material; and
stabilizing the crushed battery material using a cooling fluid,
wherein the crushed battery material includes at least one crushed unit battery material, and
the crushed unit battery material has a layered structure including a separator in which a positive electrode or a negative electrode is laminated on at least one surface and satisfies the following Conditions 1 and 2:

<Condition 1>
the layered structure has a laminate structure of 1 layer or more and 7 layers or less,
<Condition 2>
a size of the crushed unit battery material is 100 mm or less based on a long axis which is the longest axis in horizontal, vertical, and height directions.

8. The battery treatment method of claim 7, wherein:
the crushing includes controlling a ratio of the crushed unit battery material to 90% or more in a total volume of the crushed battery material.

9. The battery treatment method of claim 7, wherein:
the freezing of a battery satisfies the following Equation 1:

<Equation 1>

$$\text{Minimum cooling time (Hr)} = A \times (W^{0.33})$$

wherein $A = 4 \times e^{(-0.02 \times dT)}$, W = battery weight (Kg), dT= | external cooling temperature - target temperature | , and ‖ refers to an absolute value.

10. The battery treatment method of claim 7, wherein:
the freezing is performed by cooling to -150°C to -20°C.

11. The battery treatment method of claim 7, wherein:
the stabilizing of the crushed battery material using a cooling fluid is performed under a condition of 15 to 40°C.

12. The battery treatment method of claim 7, wherein: the cooling fluid is performed by any one of air, vacuum, nitrogen, inert gas, and water.

13. The battery treatment method of claim 7, wherein:
when the cooling fluid is performed by a gas, an average stabilization time satisfies the following Equation 2:

<Equation 2>

$$B = 0.0125A^2 + 2.6979A + 170.9 \pm 100$$

wherein A is a size of crushed material [mm], and B is a stabilization time [min].

14. The battery treatment method of claim 7, wherein:
   when the cooling fluid is performed by a liquid, an average stabilization time satisfies the following Equation 3:

<Equation 3>

$$B = -0.0007A^2 + 0.3246A + 37.07 \pm 50$$

wherein A is a size of crushed material [mm], and B is a stabilization time [min].

15. The battery treatment method of claim 7, wherein:

   the freezing is performed by cooling to -60°C to -20°C, and
   the crushing is performed under a vacuum atmosphere condition of 100 torr or less.

16. The battery treatment method of claim 7, wherein:
   a recovery time taken to cool the crushed battery material to a range of 20 to 50°C in the crushing is 200 minutes or less.

17. The battery treatment method of claim 7, further comprising:
   after the crushing, performing magnetic separation or gravity separation to separate a product having a maximum size of 1 mm or less.

【Figure 1】

【Figure 2】

【Figure 3A】

【Figure 3B】

【Figure 3C】

【Figure 3D】

【Figure 4】

20 mm crushed material

Temperature (°C) — axis: 80, 60, 40, 20, 0, -20, -40, -60, -80

Time(s) — axis: 368, 735, 1102, 1469, 1836, 2203, 2570, 2937, 3304, 3671, 4038, 4405, 4772, 5139, 5506, 5873, 6240, 6607, 6974, 7341, 7708, 8075, 8442, 8809, 9176, 9543, 9910, 10277

【Figure 5A】

【Figure 5B】

Time taken to stabilize gas

**———** Maximum time　　　------- Polynomial expression (average time)

**—·—** Minimum time　　　——— Average time

$y = 0.0125x^2 + 2.679x + 170.9$

Stabilization time(min)

Crushed material size(mm)

Time taken to stabilize liquid

[Figure 6B]

EP 4 597 687 A1

# EP 4 597 687 A1

## INTERNATIONAL SEARCH REPORT

| International application No. |
| --- |
| **PCT/KR2023/015109** |

### A. CLASSIFICATION OF SUBJECT MATTER

**H01M 10/54**(2006.01)i; **B09B 3/35**(2022.01)i; **B02C 23/08**(2006.01)i; **B03C 1/00**(2006.01)i; **B09B 101/16**(2022.01)i

According to International Patent Classification (IPC) or to both national classification and IPC

### B. FIELDS SEARCHED

Minimum documentation searched (classification system followed by classification symbols)

H01M 10/54(2006.01); B02C 21/00(2006.01); B02C 23/14(2006.01); C22B 11/00(2006.01); H01M 4/86(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폐배터리(used battery), 유가 금속(valuable metal), 냉동(freezing), 파쇄 (crush), 층상형(layered), 분리막(separator)

### C. DOCUMENTS CONSIDERED TO BE RELEVANT

| Category* | Citation of document, with indication, where appropriate, of the relevant passages | Relevant to claim No. |
| --- | --- | --- |
| X | JP 2012-195073 A (MITSUI MINING & SMELTING CO., LTD.) 11 October 2012 (2012-10-11)<br>See paragraphs [0003], [0018], [0022]-[0023], [0026], [0034], [0038]-[0039] and [0049]. | 1-17 |
| A | JP 2001-126781 A (MITSUI MINING & SMELTING CO., LTD.) 11 May 2001 (2001-05-11)<br>See entire document. | 1-17 |
| A | CN 109550568 A (ZHUZHOU DINGDUAN EQUIPMENT CO., LTD.) 02 April 2019 (2019-04-02)<br>See entire document. | 1-17 |
| A | JP 2016-006769 A (BASF CORP.) 14 January 2016 (2016-01-14)<br>See entire document. | 1-17 |
| A | KR 10-2430803 B1 (NH RECYTECH COMPANY) 09 August 2022 (2022-08-09)<br>See entire document. | 1-17 |

☐ Further documents are listed in the continuation of Box C.    ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **15 January 2024** | **16 January 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/015109**

| Patent document cited in search report | | | Publication date (day/month/year) | Patent family member(s) | | | Publication date (day/month/year) |
|---|---|---|---|---|---|---|---|
| JP | 2012-195073 | A | 11 October 2012 | JP | 5675452 | B2 | 25 February 2015 |
| JP | 2001-126781 | A | 11 May 2001 | None | | | |
| CN | 109550568 | A | 02 April 2019 | None | | | |
| JP | 2016-006769 | A | 14 January 2016 | AU | 2008-293739 | A1 | 05 March 2009 |
| | | | | CA | 2697367 | A1 | 05 March 2009 |
| | | | | CA | 2697367 | C | 28 March 2017 |
| | | | | EP | 2191026 | A1 | 02 June 2010 |
| | | | | JP | 2010-537049 | A | 02 December 2010 |
| | | | | JP | 5784307 | B2 | 24 September 2015 |
| | | | | JP | 6058074 | B2 | 11 January 2017 |
| | | | | US | 2009-0049954 | A1 | 26 February 2009 |
| | | | | US | 7635534 | B2 | 22 December 2009 |
| | | | | WO | 2009-029463 | A1 | 05 March 2009 |
| KR | 10-2430803 | B1 | 09 August 2022 | None | | | |

Form PCT/ISA/210 (patent family annex) (July 2022)